# EUROPÄISCHE PATENTSCHRIFT

(11) **EP 0 658 638 B1**
(45) Veröffentlichungstag und Bekanntmachung des Hinweises auf die Patenterteilung: **29.10.1997**
(21) Anmeldenummer: 94118739.5
(22) Anmeldetag: 29.11.1994
(51) Int. Cl.: D01D 4/00, D01D 1/10

(54) **Spinnkopf mit Filterkerze**
Spinning head with filter cartridge
Tête à filer avec bougie filtrante

(30) Priorität: 17.12.1993 DE 4343270
(43) Veröffentlichungstag der Anmeldung: 21.06.1995
(73) Patentinhaber: Zimmer Aktiengesellschaft, D-60388 Frankfurt (DE)
(72) Erfinder: Schröder, Heinz Dieter, D-60323 Frankfurt/Main (DE); Koschinek, Günter, D-63128 Dietzenbach (DE)

(56) Entgegenhaltungen:
- EP-A- 0 178 570
- DE-A- 4 239 560
- GB-A- 1 294 742

## Beschreibung

Die Erfindung betrifft einen Spinnkopf zum Spinnen von Polymerschmelzen mit einem Oberteil und einem Düsenblockgehäuse mit einer Düsenplatte mit einer Fläche von maximal 90 cm² und einem Schmelzekanal mit Filterkerze (US Patent 4 704 077).

Beim Schmelzspinnen muß die Polymerschmelze unmittelbar vor Durchtritt durch die Düsenplatte einer Feinstfiltration mittels Sandfilter, Metallfaser-Filterpaket oder Filterkerzen unterworfen werden. Es ist bekannt, die Polymerschmelze durch eine Mehrzahl paralleler, aus gesintertem Metallpulver oder aus mehreren Lagen Metallgewebe bestehender Filterkerzen zu leiten, wobei die Filterkerzen über ein zylindrisches Anschlußstück in Anschlußbohrungen einer Filterplatte oder eines massiven Verteilerelementes eingesteckt oder eingeschraubt werden (US Patente 3 570 059, 3 802 821 und 4 704 077).

Nachteilig hierbei ist, daß eine gleichmäßige Anströmung sämtlicher Filterkerzen praktisch ausgeschlossen ist, so daß einzelne Filterkerzen bevorzugt verschmutzen und sämtliche Filterkerzen nach verkürzter Laufzeit gereinigt bzw. ausgetauscht werden müssen. Bei formgesinterten Filterkerzen muß das Anschlußstück innerhalb der Kerze durch einen Führungszapfen verlängert sein, da anders eine schmelzedruckbeständige Verbindung zwischen porösem Körper und Anschlußstück nicht möglich ist. Dies führt anströmseitig, in Höhe des Führungszapfens zu einer Zone mit stagnierender Schmelze (Totraum) und, trotz hoher Maßgenauigkeit, zum Einpressen von Schmelze zwischen Anschlußstück und Anschlußbohrung. Eine verlängerte Verweilzeit einzelner Schmelzeteile führt jedoch zum unerwünschten thermischen Abbau des Polymers bis hin zu vercrackten Produkten. Auch sind formgesinterte Filterkerzen sehr teuer.

Preisgünstiger und daher weit verbreitet sind Filterkerzen aus Metallgewebe, wobei das zunächst flache Gewebe zu einem Zylinder mit Längsnaht zusammengeschweißt ist, der mit Rundnähten an die Abschlußkappe und an das Anschlußstück mit innenliegendem Führungsbund angeschweißt ist. Diese Filterkerzen sind meist nicht völlig rund. Aufgrund dieser Fertigungstoleranzen und der wulstartigen Schweißnähte müssen innerhalb des Düsenblocks zusätzliche Montagespalten, in denen die Polymerschmelze langsamer oder gar nicht strömt, vorgesehen werden sowie die Anschlußbohrungen mit zusätzlichen Dichtungen ausgestattet werden. Ein erhöhter Anfall an vercracktem Polymer und dadurch verkürzte Betriebszeiten zwischen den Reinigungsstillständen sind die Folge. Auch werden Reinigungsfähigkeit und Druckbeständigkeit durch die Schweißnähte vermindert.

Aufgabe der vorliegenden Erfindung ist daher, einen Spinnkopf mit Filterkerzen derart zu gestalten, daß die genannten Nachteile nicht oder zumindest in weit geringerem Umfang auftreten. Insbesondere sollte eine gleichmäßige Polymerschmelze-Strömung unter Ausschaltung von Toträumen angestrebt werden.

Die Lösung dieser Aufgabe erfolgt erfindungsgemäß durch einen Spinnkopf entsprechend den Angaben der Patentansprüche.

Kernstück der vorliegenden Erfindung ist eine neuartige Filterkerze. Während für in der Spinnerei übliche Filterkerzen ein flaches Metallgewebe zu einem Zylinder zusammengeschweißt wird, besteht die erfindungsgemäße Filterkerze aus einem Stück eines nahtlosen Metallgewebe-Schlauches, welches einerseits mit einer Abschlußkappe und andererseits mit einem konischen Anschlußstück elektronenstrahlverschweißt ist.

Die die Filterkerze aufnehmende Zone des Schmelzekanals ist zumindest im unteren Drittel als Konus ausgebildet, und zwar derart, daß das konische Anschlußstück der Filterkerze von der Polymerschmelze selbstdichtend in den Konus des Schmelzekanals gedrückt wird. Hierbei ist jeder Düsenplatte nur eine einzige Filterkerze zugeordnet. Um dennoch ein ausreichendes Verhältnis Filterfläche zu Düsenplattenfläche von mindestens 0,5 : 1 bei vertretbarer Filterlänge zu sichern, muß die Düsenplattenfläche auf maximal 90 cm², vorzugsweise maximal 60 cm² beschränkt werden. Größere Düsenplatten sind daher von der Anwendung der vorliegenden Erfindung ausgeschlossen. Dafür ist aber eine höchst gleichmäßige Polymerschmelze-Strömung sichergestellt. Bei einer aus Montagegründen bevorzugten Filterlänge von maximal 15 cm, insbesondere von 4 bis 10 cm, liegt das Verhältnis Filterfläche zu Düsenplattenfläche vorzugsweise im Bereich von 0,5 : 1 bis 2 : 1, besonders bevorzugt bei 1 : 1.

Die Längsschweißnaht herkömmlicher Filterkerzen entfällt und die Rundnähte fallen durch die Elektronenstrahlverschweißung weniger wulstig aus. In Verbindung mit der konischen Ausbildung des Schmelzekanals wird daher kein Montagespalt und/oder zusätzliche Dichtung benötigt.

Die Erfindung wird nachfolgend anhand der Abbildungen näher erörtert, wobei
- Fig. 1: eine erfindungsgemäße Filterkerze,
- Fig. 2: einen Spinnkopf mit in einen konischen Schmelzekanal eingesetzter Filterkerze und
- Fig. 3: einen Spinnkopf mit in einen teils konischen, teils zylindrischen Schmelzekanal eingesetzter Filterkerze zeigen.

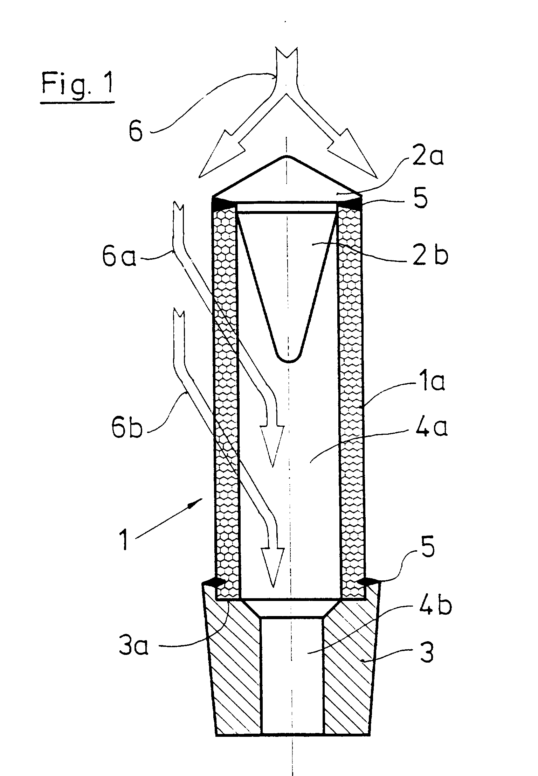

Die in Fig. 1 dargestellte, erfindungsgemäße Filterkerze (1) besteht aus einem Stück eines handelsüblichen, nahtlosen, zylindrischen Metallgewebeschlauches (1a) aus mehreren zusammengesinterten, nahtlosen Gewebeschichten. Der Außendurchmesser des Filterschlauches beträgt vorzugsweise 8 bis 20 mm, besonders bevorzugt 12 bis 16 mm, die Länge, die von den Einbaumaßen des Spinnkopfes bestimmt wird, vorzugsweise 4 bis 15 cm und die Filterfeinheit 5 bis 20 µm. Der zulässige Differenzdruck liegt bei maximal 350 bar.

Das obere Ende ist mit einer schmelzeundurchlässigen Abschlußkappe (2a) mit Strömungsleitkegel (2b) elektronenstrahlverschweißt (5). Die der Polymerschmelze-Strömung (6) zugewandte Seite der Abschlußkappe (2a) hat, der besseren Strömungsführung wegen, die Form eines vorzugsweise an der Spitze abgerundeten Kegels oder einer Kugelkalotte. Der in die Filterkerze hineinragende Teil (2b) hat die Form eines langgezogenen Kegels mit nach unten zeigender, abgerundeter Spitze, wodurch die Ausbildung von Schmelze-Wirbeln im oberen Bereich der Filterzone verhindert und eine Egalisierung der Ströme (6a) und (6b) erreicht wird.

Das untere Ende ist mit einem sich nach unten verjüngenden konischen Anschlußstück (3) mit Sitz (3a) und Schmelzedurchführung (4b) elektronenstrahlverschweißt (5). Der äußere Konus entspricht einem Kegel im Bereich von 1 : 20 bis 1 : 50, vorzugsweise von 1 : 50 (nach DIN-Norm Nr. 7178, Blatt 1), wobei der obere Durchmesser nur um soviel größer ist als der der Filterzone (1), wie zum Anschweißen erforderlich. Die Länge des Anschlußstückes (3) wird von Festigkeitserwägungen bestimmt und liegt in etwa in der gleichen Größenordnung wie der obere Durchmesser. Der Schmelzekanal (4b) kann den gleichen Durchmesser haben wie der innerhalb der Filterzone (4a) oder sich nach unten verjüngen oder bevorzugt, wie hier gezeigt, einen etwas geringeren Durchmesser mit konischem Übergang aufweisen. Die durch diese Verengung hervorgerufene leichte Schmelze-Kompression fördert die Gleichmäßigkeit der Verteilung der Schmelze über die gesamte Düsenplatte.

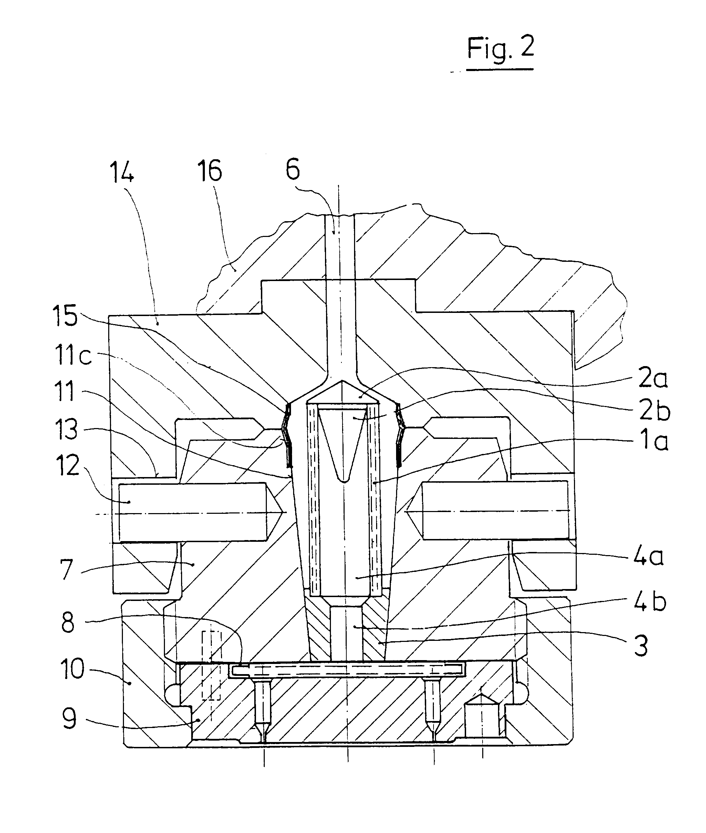

Fig. 2 zeigt den Einbau der Filterkerze in einen Spinnkopf mit runder Düsenplatte und einem Nut-Bolzen-Verschluß gemäß der deutschen Patentanmeldung 4 239 560A . Die Düsenblockverschraubung (10) trägt in üblicher Weise die gegen Verdrehen gesicherte Düsenplatte (9), darüber ein selbstdichtendes Filter (8) und das Düsenblockgehäuse (7). In das Düsenblockgehäuse (7) sind symmetrisch und senkrecht zur Spinnachse mindestens zwei Bolzen (12), die in entsprechende Nuten (13) mit kurvenförmiger Konfiguration des mit dem Spinnbalken (16) fest verschraubten Spinnkopfoberteils (14) verriegelbar eingreifen, fest eingelassen. Das Verschließen bzw. Lösen dieses Nut-Bolzen-Verschlußes erfolgt durch Drehen des Spinnkopfunterteils um die Spinnachse. Bedingt durch die kurvenförmige Konfiguration der Nuten (13) wird beim Verschließen das Düsenblockgehäuse (7) gegen das Oberteil (14) gezogen und in dieser Position verriegelt, wobei gleichzeitig die Hülsendichtung (15) in Höhe der Verbindungsfläche zwischen Düsenblockgehäuse (7) und Oberteil (14) rein mechanisch gegen die kegelig erweiterte Wandzone (11c) druckdicht gespreizt wird.

Der Schmelzekanal (6) ist zur Aufnahme der erfindungsgemäßen Filterkerze im unteren Bereich des Oberteils (14) trichterförmig erweitert und anschließend, vom Sitz der Hülsendichtung (15) an über die gesamte Länge des Düsenblockgehäuses (7) konisch ausgebildet. Der sich nach unten verjüngende Konus (11) des Schmelzekanals entspricht dem gleichen Kegel wie der Konus des Anschlußstückes (3) und dient gleichzeitig als Sitz für dieses Anschlußstück. Durch den von der Polymerschmelze im Schmelzekanal (6), insbesondere auf die Abschlußkappe (2a) der Filterkerze ausgeübten Druck, wird das Anschlußstück (3) der Filterkerze selbstdichtend in den Konus (11) des unteren Schmelzekanals gepreßt. Da die Filterzone (1a) dem Schmelzefluß einen geringeren Widerstand entgegensetzt als der der hohen Maßgenauigkeit entsprechend minimale Spalt zwischen den Konen (3) und (11), bleibt dieser Spalt praktisch frei von Polymerablagerungen.

Die Polymerschmelze wird von der Abschlußkappe (2a) symmetrisch auf den Ringspalt zwischen der Wandung des konischen Bereichs (11) des Schmelzekanals und der Filterzone (1a) verteilt. Die Filterkerze wird radial von außen nach innen (4a) durchströmt, wobei der Schmelzefluß eine weitere Egalisierung durch den Strömungsleitkegel (2b) erfährt. Toträume sind weder im Ringspalt noch innerhalb der Filterkerze vorhanden. Die durch die Verengung des Schmelzekanals (4b) bewirkte Kompression trägt zur gleichmäßigeren Verteilung der Schmelze auf den gesamten Querschnitt des Filters (8) und der Düsenplatte (9) bei.

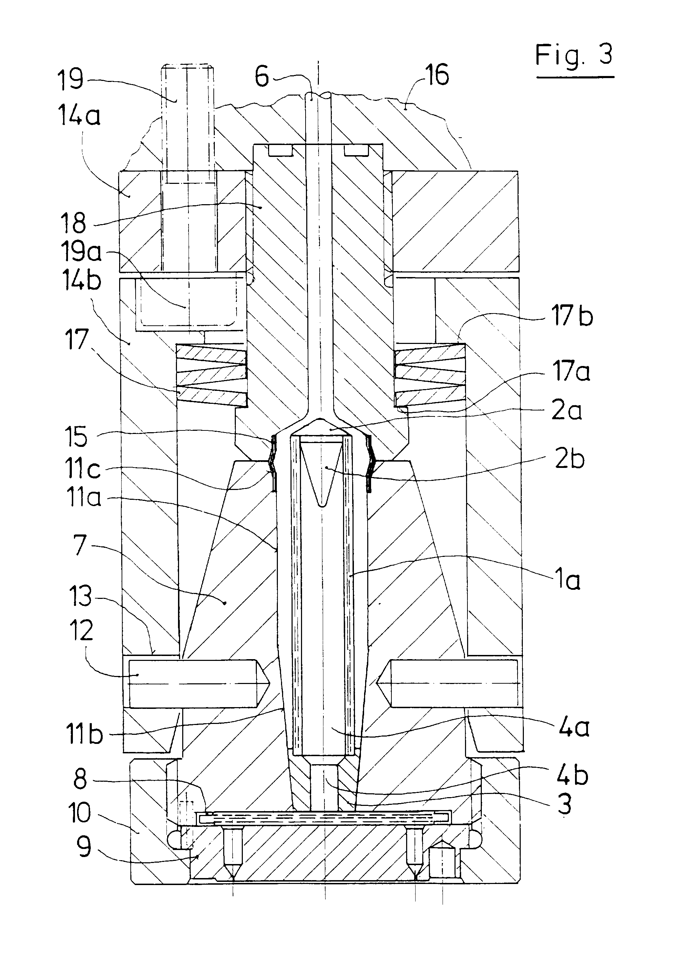

Der in Fig. 3 dargestellte Spinnkopf unterscheidet sich von dem der Fig. 2 im wesentlichen durch einen anderen, gefederten Aufbau des Spinnkopf-Oberteils und die Form der die Filterkerze aufnehmenden Zone des Schmelzekanals.

Das Spinnkopf-Oberteil besteht hier aus dem über die Schrauben (19) am Spinnbalken (16) befestigten Flansch (14a), dem in den Flansch (14a) eingeschraubten Zapfen (18) und dem von den Federn (17) zwischen den Auflageflächen (17a) und (17b) auf dem Zapfen (18) getragenen und gegen Verdrehen durch die Schraubenköpfe (19a) gesicherten Kupplungsring (14b).

Die hier gezeigte Filterkerze ist besonders lang. Die die Filterkerze aufnehmende Zone (11) des Schmelzekanals (6) ist daher nur im unteren, mindestens einem Drittel der Gesamteinbauhöhe entsprechenden Bereich (11b) konisch ausgeführt und im oberen Bereich (11a) zylindrisch fortgeführt. Auf diese Weise wird eine unzulässig große Erweiterung des Ringspaltes zwischen der Wandung (11a) und der Filterzone (1a) im oberen Bereich vermieden. Ansonsten entsprechen Aufbau, Funktion und Bezifferung denen der Fig. 2.

Verwendung und Einbau der erfindungsgemäßen Filterkerze ist auch bei anders aufgebauten Spinnköpfen, insbesondere solchen mit Schraubverschluß, möglich. Runde Düsenplatten werden bevorzugt; ovale oder rechteckige, deren Längsmaße die Quermaße nicht wesentlich überschreiten sind einsetzbar. Bedingung ist allerdings, daß die Fläche der Düsenplatte 90 cm², bevorzugt 60 cm², nicht überschreitet, da andernfalls die Filterfläche der erfindungsgemäß einzigen Filterkerze nicht ausreichen würde. Bei Spinnköpfen mit mehr als einer Düsenplatte ist in Strömungsrichtung vor jeder dieser Düsenplatten je eine erfindungsgemäße Filterkerze angeordnet.

Insgesamt ermöglicht ein Spinnkopf mit der erfindungsgemäß eingesetzten Filterkerze einen sehr gleichmäßigen totraumfreien Schmelzefluß bei gleichmäßiger, symmetrischer Anströmung der Filterfläche. Die maximal zulässige Druckdifferenz liegt um etwa 100 bar höher als bei herkömmlichen Filterkerzen. Montage und Reinigung sind einfach. Die Kosten sind nicht höher als bei bekannten Filtersystemen, eher niedriger.

## Patentansprüche

1. Spinnkopf zum Spinnen von Polymerschmelzen mit einem Oberteil (14) und einem Düsenblockgehäuse (7) mit einer Düsenplatte (9) mit einer Fläche von maximal 90 cm² und einem Schmelzekanal (6) mit Filterkerze (1), dadurch gekennzeichnet, daß
in Strömungsrichtung vor jeder Düsenplatte (9) eine einzige Filterkerze angeordnet ist,
die Filterkerze (1) aus einem von außen nach innen radial durchströmten, nahtlosen Metallgewebe-Zylinder (1a) mit einer Abschlußkappe (2a) am oberen Ende und mit einem sich nach unten verjüngenden konischen Anschlußstück (3) mit Schmelzedurchführung (4b) am unteren Ende, besteht,
und die die Filterkerze aufnehmende Zone (11) des Schmelzekanals, zumindest im unteren Drittel (11b), derart als Konus ausgebildet ist, daß das konische Anschlußstück (3) der Filterkerze von der Polymerschmelze selbstdichtend in den Konus gepreßt wird.

2. Spinnkopf gemäß Anspruch 1, dadurch gekennzeichnet, daß das Verhältnis der Filterfläche (1a) zur Fläche der Düsenplatte (9) mindestens 0,5 : 1 beträgt.

3. Spinnkopf gemäß Anspruch 2, dadurch gekennzeichnet, daß die Filterkerze (1) eine Filterlänge von maximal 15 cm aufweist, und das Verhältnis der Filterfläche (1a) zur Fläche der Düsenplatte (9) im Bereich von 0,5 : 1 bis 2 : 1 liegt.

4. Spinnkopf gemäß einem der Ansprüche 1 bis 3, dadurch gekennzeichnet, daß das konische Anschlußstück (3) einem Kegel von 1 : 20 bis 1 : 50 entspricht.

5. Spinnkopf gemäß Anspruch 4, dadurch gekennzeichnet, daß das konische Anschlußstück (3) einem Kegel von 1 : 50 entspricht.

6. Spinnkopf gemäß einem der Ansprüche 1 bis 5, dadurch gekennzeichnet, daß die Filterkerze (1) eine Filterfeinheit von 5 bis 20 µm und einen maximal zulässigen Differenzdruck von 350 bar aufweist.

7. Spinnkopf gemäß einem der Ansprüche 1 bis 6, dadurch gekennzeichnet, daß die die Filterkerze aufnehmende Zone (11) des Schmelzekanals im unteren Bereich (11b) konisch und im oberen Bereich (11a) zylindrisch ausgebildet ist.

8. Spinnkopf gemäß einem der Ansprüche 1 bis 6, dadurch gekennzeichnet, daß die die Filterkerze aufnehmende Zone (11) des Schmelzekanals über ihre gesamte Länge konisch ausgebildet ist.

9. Spinnkopf gemäß einem der Ansprüche 1 bis 8, dadurch gekennzeichnet, daß der nahtlose Metallgewebe-Zylinder (1a) der Filterkerze einerseits mit der Abschlußkappe (2a) und andererseits mit dem konischen Anschlußstück (3) elektronenstrahlverschweißt ist.

10. Spinnkopf gemäß einem der Ansprüche 1 bis 9, dadurch gekennzeichnet, daß das Düsenblockgehäuse (7) rund ist und über in Nuten (13) mit kurvenförmiger Konfiguration verriegelbar eingreifende Bolzen (12) an das Oberteil (14) angeschlossen ist, und die Abdichtung des Schmelzekanals (6) an den Verbindungsflächen innerhalb des Düsenblockgehäuses durch Hülsendichtungen (15) erfolgt, welche durch das Verriegeln beim Anschluß an das Oberteil druckdicht gespreizt werden.

## Claims

1. A spinning head for spinning polymer melts having an upper part (14) and a nozzle block housing (7) having a nozzle plate (9) with a maximum area of 90 cm³ and a melt channel (6) with filter cartridge (1),
**characterised in that**
a single filter cartridge is disposed in the direction of flow in front of each nozzle plate (9),
the filter cartridge (1) consists of a seamless metallic cloth cylinder (la), through which the flow radially passes from the outside to the inside, having an end cap (2a) at the upper end and having a downwardly tapering conical connection piece (3) with melt passage (4b) at the lower end,
and the zone (11) of the melt channel receiving the filter cartridge, at least in the lower third (llb), is constructed as a cone in such a manner that the conical connection piece (3) of the filter cartridge is pressed in a self-sealing manner into the cone by the polymer melt.

2. A spinning head according to Claim 1,
**characterised in that** the ratio of the filter area (la) to the area of the nozzle plate (9) is at least 0.5 : 1.

3. A spinning head according to Claim 2,
**characterised in that** the filter cartridge (1) comprises a maximum filter length of 15 cm, and the ratio of the filter area (la) to the area of the nozzle plate (9) lies in the range of 0.5 : 1 to 2 : 1.

4. A spinning head according to one of Claims 1 to 3, **characterised in that** the conical connection piece (3) corresponds to a taper of 1 : 20 to 1 : 50.

5. A spinning head according to Claim 4,
**characterised in that** the conical connection piece (3) corresponds to a taper of 1 : 50.

6. A spinning head according to one of Claims 1 to 5, **characterised in that** the filter cartridge has a filter mesh of 5 to 20 µm and a maximum permissible differential pressure of 350 bar.

7. A spinning head according to one of Claims 1 to 6, **characterised in that** the zone (11) of the melt channel receiving the filter cartridge has a conical construction in the lower region (llb) and a cylindrical construction in the upper region (lla).

8. A spinning head according to one of Claims 1 to 6, **characterised in that** the zone (11) of the melt channel receiving the filter cartridge has a conical construction over its entire length.

9. A spinning head according to one of Claims 1 to 8, **characterised in that** the seamless metallic cloth cylinder (1a) of the filter cartridge is electron-beam welded on one side with the end cap (2a) and on the other side with the conical connection piece (3).

10. A spinning head according to one of Claims 1 to 9, **characterised in that** the nozzle block housing (7) is round and is connected to the upper part (14) via bolts (12) latchably engaging in slots (13) having a curved configuration, and the sealing of the melt channel (6) at the connecting faces inside the nozzle block housing is performed by sleeve seals (15), which are expanded in a pressure-tight manner by the locking when connected to the upper part.

## Revendications

1. Tête de filature pour la filature de fonte de polymère, comprenant une partie supérieure (14) et un boîtier de bloc à buses (7) avec une plaque à buses (9) d'une surface maximum de 90 cm² et un canal de fonte (6) avec une bougie filtrante (1), caractérisée en ce que :
- une bougie filtrante unique est agencée devant chaque plaque à buses (9) en direction d'écoulement ;
- la bougie filtrante (1) est constituée par un cylindre (1a) de textile métallique sans soudure, traversé par l'écoulement radialement de l'extérieur vers l'intérieur, avec un capuchon de fermeture (2a) à l'extrémité supérieure et une pièce de raccordement (3) conique, avec passage pour la fonte (4b), prévue à l'extrémité inférieure et allant en se rétrécissant vers le bas ; et
- la zone (11) du canal de fonte qui reçoit la bougie filtrante, est réalisée sous forme de cône, au moins dans le tiers inférieur (11b), de sorte que la pièce de raccordement conique (3) de la bougie filtrante est pressée de manière auto-étanche dans le cône par la fonte de polymère.

2. Tête de filature selon la revendication 1, caractérisée en ce que le rapport entre la surface de filtration (1a) et la surface de la plaque à buses (9) s'élève à au moins 0,5:1.

3. Tête de filature selon la revendication 2, caractérisée en ce que la bougie filtrante (1) a une longueur de filtration maximum de 15 cm, et en ce que le rapport entre la surface de filtration (1a) et la surface de la plaque à buses (9) est situé dans la plage de 0,5:1 à 2:1.

4. Tête de filature selon l'une des revendications 1 à 3, caractérisée en ce que la pièce de raccordement conique (3) correspond à un cône de 1:20 à 1:50.

5. Tête de filature selon la revendication 4, caractérisée en ce que la pièce de raccordement conique (3) correspond à un cône de 1:50.

6. Tête de filature selon l'une des revendications 1 à 5, caractérisée en ce que la bougie filtrante (1) présente une finesse de filtration de 5 à 20 microns, et une pression différentielle maximum admissible de 350 bar.

7. Tête de filature selon l'une des revendications 1 à 6, caractérisée en ce que la zone (11) du canal de fonte qui reçoit la bougie filtrante est réalisée sous forme conique dans la région inférieure (11b) et sous forme cylindrique dans la région supérieure (11a).

8. Tête de filature selon l'une des revendications 1 à 6, caractérisée en ce que la zone (11) du canal de fonte qui reçoit la bougie filtrante est réalisée sous forme conique sur la totalité de sa longueur.

9. Tête de filature selon l'une des revendications 1 à 8, caractérisée en ce que le cylindre (1a) en textile métallique sans soudure de la bougie filtrante est soudée par faisceau d'électrons d'une part avec le capuchon de fermeture (2a) et d'autre part avec la pièce de raccordement conique (3).

10. Tête de filature selon l'une des revendications 1 à 9, caractérisée en ce que le boîtier de bloc à buses (7) est rond et raccordé à la partie supérieure (14) au moyen de boulons (12) qui s'engagent avec faculté de verrouillage dans des gorges (13) de configuration incurvée, et en ce que l'étanchement du canal de fonte (6) au niveau des surfaces de liaison à l'intérieur du boîtier de bloc à buses est assuré par des joints à douille (15), qui sont écartés par le verrouillage lors du raccordement à la partie supérieure, de manière étanche à la pression.
